# EUROPÄISCHE PATENTSCHRIFT

(11) **EP 1 580 123 B1**
(45) Veröffentlichungstag und Bekanntmachung des Hinweises auf die Patenterteilung: **24.01.2007**
(21) Anmeldenummer: 05004580.6
(22) Anmeldetag: 02.03.2005
(51) Int. Cl.: B64D 13/00, B64D 13/02, B64D 13/08

(54) **System zur Druckluftaufbereitung**
System and method for treating compressed air
Système et procédé pour traiter de l'air comprimé

(30) Priorität: 03.03.2004 DE 102004010366
(43) Veröffentlichungstag der Anmeldung: 28.09.2005
(73) Patentinhaber: Liebherr-Aerospace Lindenberg GmbH, 88161 Lindenberg/Allgäu (DE)
(72) Erfinder: Dipl.-Ing. Brutscher, Norbert, 88161 Lindenberg (DE); Dipl.-Ing. Haas, Joachim, 88239 Wangen (DE)
(74) Vertreter: Herrmann, Uwe

(56) Entgegenhaltungen:
- EP-A- 1 273 514
- EP-A- 1 375 349
- DE-A1- 4 104 007
- PATENT ABSTRACTS OF JAPAN Bd. 2003, Nr. 12, 5. Dezember 2003 (2003-12-05) & JP 2003 240375 A (SUMITOMO PRECISION PROD CO LTD), 27. August 2003 (2003-08-27)

## Beschreibung

Die Erfindung betrifft ein System zur Druckluftaufbereitung mit einem Wärmetauscher (Systemwärmetauscher), der druckluftseitig einlassseitig mit einer Druckluftquelle in Verbindung steht und druckluftseitig auslassseitig mit einem System oder Gerät in Verbindung steht, das mit gekühlter Druckluft zu versorgen ist, und mit wenigstens einem Wärmetauscher (Klimaanlagenwärmetauscher), der druckluftseitig einlassseitig mit einer Druckluftquelle in Verbindung steht und druckluftseitig auslassseitig mit weiteren Komponenten einer Flugzeugklimaanlage in Verbindung steht.

In bevorzugter Ausgestaltung betrifft die Erfindung eine Architektur zur Druckluftaufbereitung, welche zum Betrieb (Versorgung) von Sauerstoff- und Stickstofferzeugungsgeräten in Flugzeugen benötigt wird.

Bei Passagierflugzeugen ist es erforderlich die Kabine zu temperieren (Kühlen/Heizen), ventilieren und zu bedrucken. Dazu sind verschiedene Systeme notwendig wie:
a) Klimaanlagen
   In der Klimaanlage wird die vom Druckluftzapfsystem kommende Luft entsprechend der anfallenden Kühl- und Heizanforderungen gekühlt, um eine konstante Temperatur in der Kabine zu gewährleisten. Zusätzlich wird der notwendige Frischluftdurchsatz zum Ventilieren der Kabine sichergestellt.
b) Kabinendruckregelsystem
   Dieses System regelt den Kabinendruck, indem mittels variabler Ventilposition mehr oder weniger Kabinenluft an die Umgebung zurück strömt.

Der Ausfall eines dieser Systeme oder eine hohe Leckage der Kabine führt zu einem Abfall des Kabinendrucks. Des weiteren kann durch andere Fehlfunktionen starke Rauchentwicklung in der Kabine auftreten. In all diesen Fällen ist eine Sauerstoff-Notversorgung der Passagiere und der Flugzeugbesatzung erforderlich.

Es ist bekannt, die Sauerstoff-Notversorgung durch ein Notsauerstoffsystem sicherzustellen. Dazu werden im Flugzeug unter Druck stehende Sauerstoffflaschen mitgeführt, die im Notfall Sauerstoff mittels Masken an die Passagiere und Flugzeugbesatzung abgeben. Dieses Notsauerstoffsystem ist jedoch mit verschiedenen Nachteilen verbunden wie Gewicht, begrenzte Sauerstoffmenge, Platzbedarf, Explosionsgefahr und aufwendige Überprüfung und Nachbefüllung.

Inzwischen stehen alternative Systeme zur Notsauerstoffversorgung zur Verfügung. Beispielsweise ist es aus der DE 41 04 007 A1 und der EP 1 375 349 A1 bekannt, gekühlte Druckluft durch ein oder mehrere Molekularsieb-Konzentrationsvorrichtungen zu pressen (OBOGS = On Board Oxygen Generation System). Dadurch ergibt sich am OBOGS Austritt Frischluft/Produktgas mit einem Sauerstoffgehalt von bis zu ca. 95%. Im Notfall wird diese Luft dann direkt an die Sauerstoffmasken geleitet und/oder zum Nachfüllen der nunmehr deutlich reduzierten Sauerstoffflaschen verwendet.

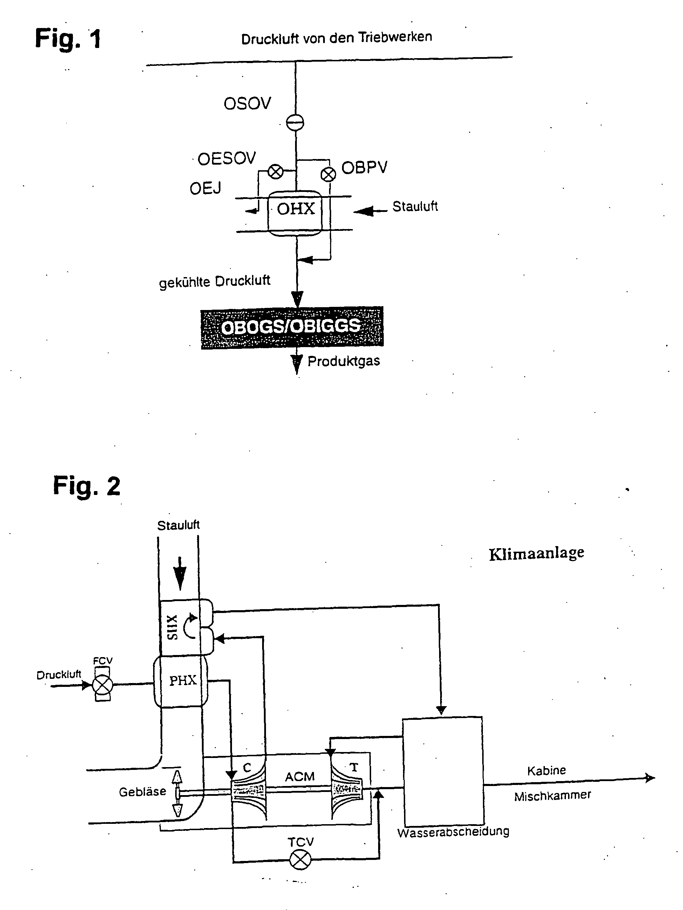

Hierbei gibt es verschiedene OBOGS Molekularsiebfüllmaterialien. All diesen Materialien ist jedoch gemeinsam, dass die Molekularsiebvorrichtungen mit gekühlter Druckluft von ca. 0°C bis 60°C und einem Relativdruck von ca. 1.4 bar (rel) bis 4.0 bar (rel) versorgt werden müssen. Nach dem Stand der Technik erfolgt die OBOGS Versorgung, indem heiße Druckluft (ca. 200°C) aus dem Druckluftzapfsystem in einen speziellen OBOGS Wärmetauscher geleitet wird. Dabei wird die Luft auf den erforderlichen Temperaturbereich von ca. 0°C bis 60°C gekühlt, wie dies aus Fig. 1 hervorgeht.

Das OBOGS ist sehr selten in Betrieb, da die Wahrscheinlichkeit eines Ausfalls der Kabinenbedruckung aufgrund der eingebauten Redundanzen sehr gering ist.

Neben dem vorgenannten System zur Notsauerstoffversorgung ist ein System zur Stickstofferzeugung bekannt, das im folgenden näher beschrieben wird:

Durch die Kerosinentnahme während des Flugs füllen sich die Flugzeugtanks mit einem Gemisch aus Kerosindampf und Luft. Bei ungünstiger Zusammensetzung kann ein explosives Gemisch entstehen, welches sich selbst oder durch Funkenbildung entzündet.

Untersuchungen haben gezeigt, dass durch eine Reduzierung des (normalen) Sauerstoffgehalts der Luft im Kerosintank von 21% auf ca. 12% bis 14.5% eine Selbstentzündung des Gemisches zuverlässig vermieden werden kann. Neben einem geringen Sauerstoffgehalt ist ein hoher Stickstoffgehalt vorteilhaft, um eine Selbstentzündung zu verhindern.

In der EP 1 375 349 A1 ist ein Gerät zur Erzeugung von Stickstoff beschrieben, das als OBIGGS (On Board Inert Gas Generation System) bezeichnet wird. Vergleichbar zu dem OBOGS basiert auch dieses OBIGGS auf der Molekularsiebtechnologie, wobei hier jedoch der Sauerstoff herausgefiltert wird. Am Auslass des OBIGGS entsteht ein Produktgas mit stark reduziertem Sauerstoffgehalt (kleiner ca. 10%) und einem deutlich erhöhten Stickstoffgehalt. Dieses Produktgas kann nun in die Kerosintanks geleitet werden um das Risiko einer Selbstentzündung des Kerosinluftgemisches zu vermeiden. Des weiteren kann das OBIGGS Produktgas z. B. auch in Frachträume geleitet werden, um die Feuergefahr zu minimieren.

Analog zu dem OBOGS erfordert das OBIGGS eine Versorgung mit gekühlter Druckluft von ca. 50°C bis 90°C. Je nach verwendeter Filtertechnologie beträgt der notwendige Versorgungsdruck ca. 1.7 bar (rel) bis 6.0 bar (rel) für PSA-Filter (PSA = Pressure Swing Absorption Process) und ca. 1.4 bar (rel) bis 4.1 bar (rel) für HFM-Filter (HFM = Hollow Fiber Membrane). Nach dem Stand der Technik erfolgt die OBIGGS Versorgung wie beim OBOGS, indem heiße Druckluft (ca. 200°C) aus dem Druckluftzapfsystem in einen speziellen OBOGS/OBIGGS Wärmetauscher geleitet und dort entsprechend den Anforderungen gekühlt wird.

In Fig. 1 ist ein derartiges System dargestellt. Fig. 1 zeigt, dass der Wärmetauscher OHX, der mit dem OBIGGS / OBOGS in Verbindung steht und der im folgenden als Systemwärmetauscher bezeichnet wird, einlassseitig mit Druckluft (Zapfluft) aus den Triebwerken beaufschlagt wird. Die Einlassleitung ist mittels des Ventils OSOV verschließbar. Des Weiteren ist ein Regelventil OBPV dargestellt, mittels dessen eine Bypassleitung um den Systemwärmetauscher OHX verschließbar ist. Die Bezugszeichen OESOV und OEJ sind Bestandteile einer Jet-Pump, die zur Förderung von Umgebungsluft durch den Systemwärmetauscher OHX im Bodenbetrieb benötigt wird.

Wie aus Fig. 1 weiter ersichtlich, wird der Systemwärmetauscher OHX mittels Stauluft bzw. im Bodenbetrieb mittels Umgebungsluft gekühlt.

Auf der druckluftseitigen Auslassseite des Systemwärmetauschers steht die gekühlte Druckluft zur Verfügung, die sodann dem OBIGSS/OBOGS zugeführt. An deren Auslassseite kann das gewünschte Produktgas abgezogen bzw. den fraglichen Bestimmungsorten zugeführt werden.

Eine hohe Anforderung an die Verfügbarkeit der Druckluftversorgung kann auch dazu führen, dass die in Fig. 1 gezeigte Architektur zweifach in paralleler Anordnung vorhanden ist.

Im Gegensatz zum OBOGS ist das OBIGGS überwiegend in Betrieb.

Die oben beschriebene Ausführung zur Kühlung von Druckluft ist mit verschiedenen Nachteilen verbunden:
a) Für die Stauluft des Systemwärmetauschers OHX ist ein eigenständiger Stauluftkanal notwendig einschließlich der entsprechenden Öffnungen für Einlass und Auslass in der Flugzeugstruktur. Dadurch wird der verfügbare Raum für Fracht reduziert und das Flugzeuggewicht erhöht sowie zusätzliche Kosten erzeugt.
b) Aus Kosten- und Komplexitätsgründen wird im allgemeinen auf eine Klappe am Einlass des Stauluftkanals verzichtet. Damit ist im Flug immer ein Stauluftkanaldurchsatz vorhanden, auch wenn das OBOGS und/oder OBIGGS ausgeschaltet ist. Der Stauluftdurchsatz erhöht den Flugzeugkerosinverbrauch und damit die Betriebskosten.
c) Insbesondere bei militärischen Anwendungen kann ein OBOGS und/oder OBIGGS Betrieb auch am Boden erforderlich sein. Da in diesem Betriebszustand aufgrund des fehlenden Staudrucks keine Stauluft zur Verfügung steht, muss diese aktiv gefördert werden. Hierzu muss entweder ein Gebläse oder wie in Fig. 1 gezeigt eine Jet Pump (OEJ und OESOV) eingebaut werden. Beide Varianten sind mit Kosten- und Gewichtsnachteilen verbunden.

In der EP-A-1273514 wird als Würdigung des Standes der Technik beschrieben wie, zum Zweck der Bereitstellung von gekühlter Druckluft, ohne dafür ein gesondertes Gerät bereitzuhalten, nach dem (druckluftseitig) ersten von zwei Klimaanlagenwärmetauschern Druckluft aus der zur kabinengerechten Behandlung vorgesehenen Luft abgezapft wird, die direkt zu einer Sauerstofftrennvorrichtung (OBOGS bzw. OBIGGS) geführt wird. Die EP-A-1273514 beschreibt ferner als Weiterentwicklung die Abzapfung dieser Druckluft nach dem (druckluftseitig) zweiten Klimaanlagenwärmetauscher. Hier wird also die Druckluft aus dem für die kabinengerechte Aufarbeitung vorgesehenen Luftstrom abgezapft. Ein eigener Systemwärmetauscher ist für den OBOGS bzw. OBIGGS nicht vorgesehen.

Es ist daher die Aufgabe der Erfindung, ein System zur Kühlung von Druckluft zur Versorgung eines OBOGS und / oder OBIGSS oder von Geräten mit ähnlichen Druckluftanforderungen mit geringem Gewicht bereitzustellen, das wenig Platz in Anspruch nimmt und das kostengünstig ist.

Diese Aufgabe wird durch ein System zur Druckluftaufbereitung mit den Merkmalen des Anspruchs 1 bzw. durch ein Verfahren mit den Merkmalen des Anspruchs 19 gelöst.

Gemäß Anspruch 1 ist vorgesehen, dass der Systemwärmetauscher und der wenigstens eine Klimaanlagenwärmetauscher über einen gemeinsamen Einlass zur Zufuhr mit Stau- oder Umgebungsluft verfügen, und dass der Systemwärmetauscher auf seiner druckluftseitigen Auslassseite mit dem druckluftseitigen, mit dem wenigstens einen Klimaanlagenwärmetauscher in Verbindung stehenden Leitungssystem oder mit dem wenigstens einen Klimaanlagenwärmetauscher selbst über eine verschließbare Leitung verbunden ist.

Der Systemwärmetauscher wird in den ohnehin vorhandenen Stauluftkanal der Klimaanlage integriert. Zur Kühlung des Systemwärmetauschers wird Stau- bzw. Umgebungsluft aus dem gemeinsamen Stauluftkanal des oder der Klimaanlagenwärmetauscher und des Systemwärmetauschers genutzt.

Grundsätzlich kann vorgesehen sein, dass ein oder dass mehrere Systemwärmetauscher in dem Stauluftkanal angeordnet sind.

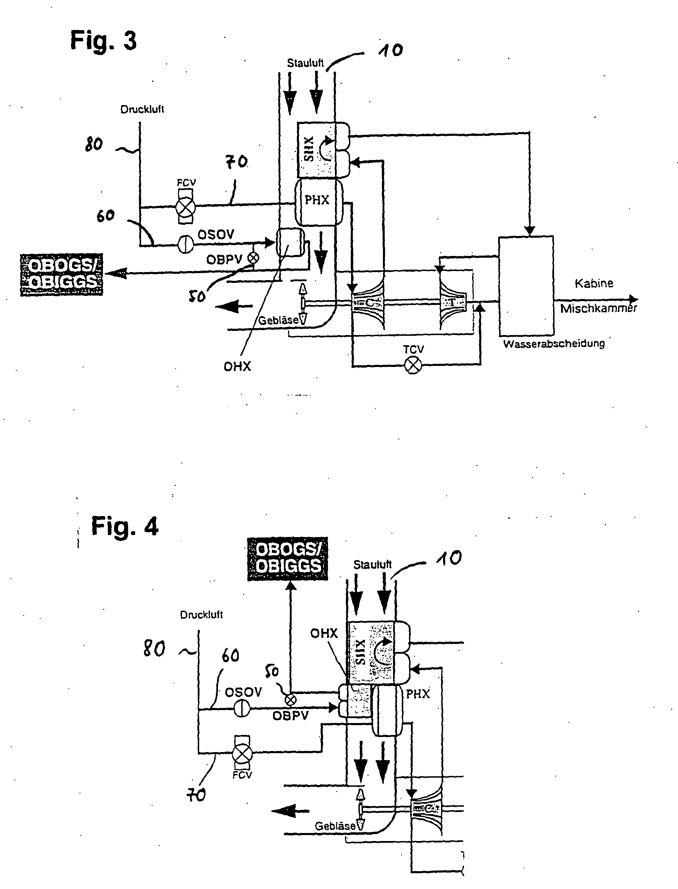

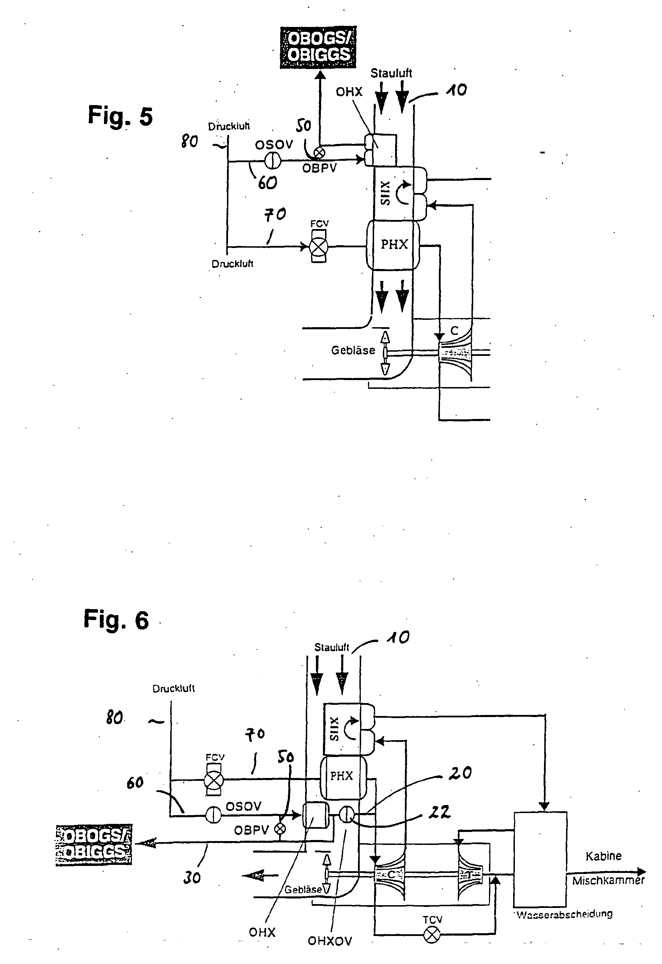

Durch eine derartige Architektur ergeben sich folgende Vorteile:
a) Gewichts- und Platzeinsparung durch Wegfall des separaten OBOGS/OBIGGS Stauluftkanals sowie dessen Ein- und Auslässe. Der Einfluss auf die Größe des Stauluftkanals der Flugzeugklimaanlage durch den hinzugekommenen Systemwärmetauscher OHX ist gering, da der Stauluftbedarf für Systemwärmetauscher OHX relativ klein ist. Der Gewichtseinfluss des OHX bleibt neutral, ist also unabhängig davon, ob er in einem separaten Stauluftkanal oder in einem gemeinsamen Stauluftkanal zusammen mit den Wärmetauschern der Klimaanlage installiert ist.
b) Weist die Flugzeugklimaanlage ein Gebläse auf, kann auch am Boden ein Stauluftdurchsatz für den Systemwärmetauscher OHX erzeugt werden. Es ist keine Jet Pump oder ein separates Gebläse für den Systemwärmetauscher OHX notwendig.
c) Bei geeigneter Anordnung des Systemwärmetauschers OHX im Stauluftkanal der Klimaanlage wird die OHX Stauluft nicht nutzlos durch den Stauluftkanal geleitet, sondern in den Wärmetauschern der Klimaanlage genutzt, wie dies im Einzelnen noch zu Fig. 4 und Fig. 5 erläutert werden wird.

Die Integration des Systemwärmetauschers OHX in den ohnehin vorhandenen Stauluftkanal führt bereits zu einer signifikanten Verbesserung von Gewicht und Bauraumbedarf bezüglich dem Stand der Technik. Es verbleiben jedoch zwei Nachteile:
a) Wenn die Geräte OBOGS/OBIGGS nicht benötigt werden (abgeschalteter Zustand) dann wird der Systemwärmetauscher OHX sozusagen nutzlos mitgetragen. Die verfügbare Kapazität für Wärmeübertragung wird nicht genutzt.
b) Bei einer parallelen OHX Anordnung, wie diese noch zu Fig. 3 erläutert wird, und abgeschaltetem OBOGS/OBIGGS ergibt sich ein nutzloser Stauluftdurchsatz durch den Systemwärmetauscher OHX. Insbesondere im Bodenbetrieb besteht der Nachteil darin, dass das Gebläse Stauluft/Umgebungsluft nutzlos durch den Systemwärmetauscher OHX fördert und diese Stauluft nicht durch die Stauluftwärmetauscher der Klimaanlage (Klimaanlagenwärmetauscher) strömt. Dadurch wird die maximal mögliche Kühlleistung der Klimaanlage reduziert.

Diese Nachteile können vermieden werden durch die erfindungsgemäße Verbindung zwischen dem druckluftseitigen Auslass des OHX und dem druckluftseitigen, mit dem wenigstens einen Klimaanlagenwärmetauscher in Verbindung stehenden Leitungssystem der Klimaanlage oder mit dem wenigstens einen Klimaanlagenwärmetauscher selbst mittels einer verschließbaren Leitung. Wenn die Systeme OBOGS / OBIGGS abgeschaltet sind, kann die Kühlleistung des Systemwärmetauschers OHX für die Klimaanlage genutzt werden. Falls der Systemwärmetauscher OHX auch im maximalen Kühlfall der Klimaanlage für die Klimaanlage zur Verfügung steht, dann können aufgrund der zusätzlichen Wärmeübertragungskapazität der oder die Stauluftwärmetauscher der Klimaanlage (Klimaanlagenwärmetauscher) verkleinert werden, was mit entsprechenden Vorteilen bezüglich Gewicht und Bauraum einhergeht.

Weitere bevorzugte Ausgestaltungen der Erfindung sind Gegenstand der Unteransprüche.

Der Systemwärmetauscher OHX kann auf seiner druckluftseitigen Auslassseite mit dem druckluftseitigen Ein- oder Auslass des wenigstens einen Klimaanlagenwärmetauschers über die verschließbare Leitung verbunden sein. Bevorzugt ist es, wenn die Anbindung der druckluftseitigen Auslassseite des Systemwärmetauschers OHX an den druckluftseitigen Auslass des Wärmetauschers der Klimaanlage, bevorzugt an den druckluftseitigen Auslass des druckluftseitig ersten Wärmetauschers der Klimaanlage, erfolgt.

Grundsätzlich ist eine Verbindung der druckluftseitigen Auslassseite des Systemwärmetauschers OHX mit dem Druckluftsystem der Klimaanlagen auch an anderer Stelle, beispielsweise an der druckluftseitigen Einlassseite des wenigstens einen Klimaanlagenwärmetauschers oder an diesen selbst möglich.

Die verschließbare Leitung kann ein Auf-/Zu-Ventil oder ein Ventil aufweisen, mittels dessen sich unterschiedliche Durchsätze durch die Leitung einstellen lassen.

In weiterer Ausgestaltung der Erfindung ist vorgesehen, dass sich die verschließbare Leitung zwischen dem druckluftseitigen Auslass des Systemwärmetauschers OHX und dem druckluftseitigen Auslass des wenigstens einen Klimaanlagenwärmetauschers erstreckt und von dieser Leitung stromaufwärts eines Ventils, mittels dessen die Leitung verschließbar ist, eine Leitung abzweigt, die zu dem System oder Gerät führt, das mit gekühlter Druckluft zu versorgen ist. Besteht seitens des Systems bzw. Gerätes keine Druckluftanforderung kann diese Leitung verschlossen werden.

In besonders bevorzugter Ausgestaltung der Erfindung ist ein druckluftseitig erster und ein diesem druckluftseitig nachgeschalteter zweiter Klimaanlagenwärmetauscher vorgesehen, wobei der Systemwärmetauscher OHX auf seiner druckluftseitigen Auslassseite über die verschließbare Leitung mit dem druckluftseitigen Ein- oder vorzugsweise Auslass des druckluftseitig ersten und stauluftseitig vorzugsweise zweiten Klimaanlagenwärmetauschers verbunden ist.

Dabei kann vorgesehen sein, dass sich die verschließbare Leitung zwischen dem druckluftseitigen Auslass des Systemwärmetauschers OHX und dem druckluftseitigen Auslass des druckluftseitig ersten Klimaanlagenwärmetauschers erstreckt und von dieser Leitung stromaufwärts eines Ventils, mittels dessen die Leitung verschließbar ist, eine Leitung abzweigt, die zu dem System oder Gerät führt, das mit gekühlter Druckluft zu versorgen ist.

Der Systemwärmetauscher OHX kann stauluftseitig relativ zu dem oder den Klimaanlagenwärmetauschem unterschiedlich angeordnet sein.

Denkbar ist, dass der Systemwärmetauscher OHX zu dem oder den Klimaanlagenwärmetauschern stauluftseitig parallel geschaltet ist und somit von Stau- bzw. Umgebungsluft geringstmöglicher Temperatur angeströmt wird.

In weiterer Ausgestaltung der Erfindung ist vorgesehen, dass der Systemwärmetauscher OHX stauluftseitig vor oder nach dem stauluftseitig ersten Klimaanlagenwärmetauscher angeordnet ist. Sofem der Systemwärmetauscher OHX und der oder die Klimaanlagenwärmetauscher stauluftseitig in Reihe geschaltet sind, kann vorgesehen sein, dass diese sich vollständig oder nur teilweise überdecken, also eine vollständige bzw. partielle Serienschaltung erzielt wird.

In weiterer Ausgestaltung der Erfindung sind zwei oder mehr Klimaanlagenwärmetauscher vorgesehen, die stauluftseitig hintereinander angeordnet sind. Dabei kann der Systemwärmetauscher OHX stauluftseitig nach dem stauluftseitig ersten Klimaanlagenwärmetauscher und stauluftseitig parallel zu einem weiteren Klimaanlagenwärmetauscher, vorzugsweise zu dem Primärwärmetauscher, d.h. dem druckluftseitig ersten Wärmetauscher der Klimaanlage angeordnet sein.

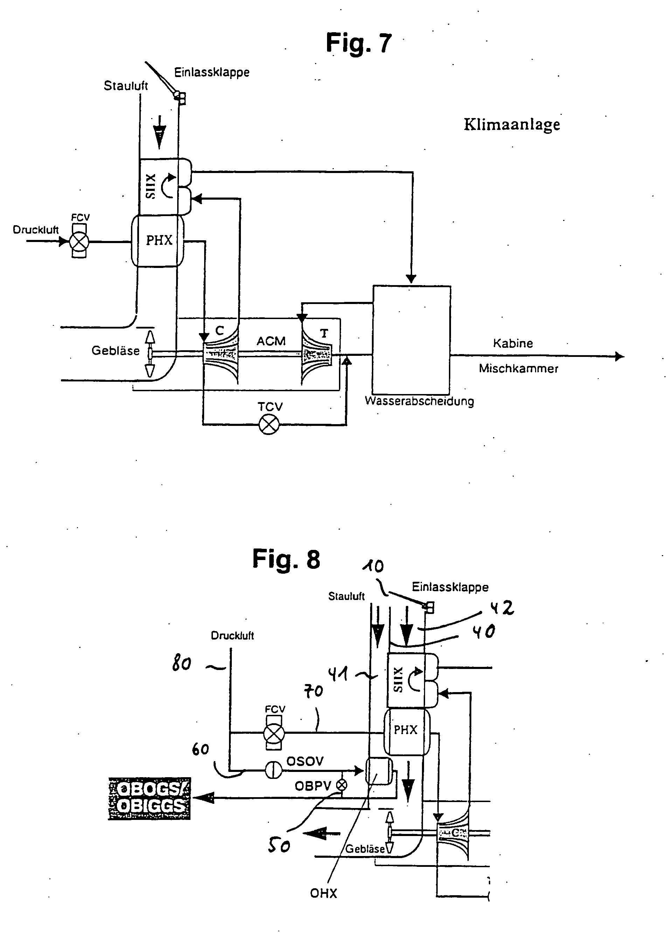

In weiterer Ausgestaltung der Erfindung ist an dem Stauluftkanaleinlass eine Staulufteinlassklappe vorgesehen, die in ihrer Schließstellung nicht die stauluftseitige Zuleitung des Systemwärmetauschers OHX verschließt. Dazu ist eine Trennwand vorgesehen ist, die bewirkt, dass die Stauluftzuführung für den Systemwärmetauscher OHX sowie für den oder die zu diesem stauluftseitig parallel angeordneten Klimaanlagenwärmetauscher getrennt erfolgt. Die verstellbare Staulufteinlassklappe verschließt im geschlossenen Zustand ausschließlich die stauluftseitige Zuleitung des oder der Klimaanlagenwärmetauscher. Dadurch lässt sich vermeiden, dass im Heizbetrieb (bei geschlossener Staulufteinlassklappe) ein zu geringer Stauluftdurchsatz erzielt wird, der zum Ausfall des Gebläses führen kann, wies dies zu Fig. 7 erläutert wird.

Die druckluftseitige Einlassleitung des Systemwärmetauschers OHX und dessen druckluftseitige Auslassleitung, die zu dem mit der gekühlten Druckluft zu versorgenden System oder Gerät führt, können mittels einer verschließbaren Bypassleitung miteinander in Verbindung stehen. Durch Öffnen der Bypassleitung kann die Temperatur in dem fraglichen System bzw. Gerät geregelt werden.

In weiterer Ausgestaltung der Erfindung ist vorgesehen, dass die zu dem druckluftseitigen Einlass des Systemwärmetauschers OHX führende Druckluftzuführung und die zu dem druckluftseitigen Einlass des oder der Klimaanlagenwärmetauscher führende Druckluftzuführung von einer gemeinsamen Druckluftleitung vom Druckluftzapfsystem abzweigen. Die Druckluft in dem Druckluftzapfsystem wird beispielsweise von den Triebwerken oder einem Hilfsaggregat zur Verfügung gestellt. In Betracht kommt jede beliebige Druckluftquelle, beispielsweise ein Verdichter.

Der Begriff "Druckluftzapfsystem" ist somit nicht auf ein System beschränkt, bei dem Druckluft von den Triebwerken oder einem Hilfsaggregat abgegriffen wird.

Weiterhin kann vorgesehen sein, dass der druckluftseitige Einlass des Systemwärmetauschers OHX über ein Ventil mit der Druckluftzuführung verbunden ist. Bei dem Ventil kann es sich um ein Auf-/Zu-Ventil oder um ein Ventil handeln, mittels dessen ein bestimmter Durchsatz einstellbar ist.

Das Ventil kann parallel zu dem Einlassventil der Flugzeugzeugklimaanlage geschaltet sein.

Weiterhin kann vorgesehen sein, dass der druckluftseitige Einlass des Systemwärmetauschers OHX mit dem Auslass des Einlassventils der Flugzeugzeugklimaanlage über eine Leitung verbunden ist. In diesem Fall wird der Systemwärmetauscher OHX über das Einlassventil der Flugzeugklimaanlage mit Druckluft versorgt.

Wie oben im einzelnen ausgeführt, kann es sich bei dem System oder Gerät, mit dem der Systemwärmetauscher OHX auf der Druckluftseite auslassseitig in Verbindung steht und das mit gekühlter Druckluft zu versorgen ist, um ein Notsauerstoffversorgungssystem (OBOGS) und/oder um ein Stickstofferzeugungssystem (OBIGGS) handeln.

Die vorliegende Erfindung betrifft ferner ein Verfahren mit den Merkmalen des Anspruchs 19. Danach ist vorgesehen, dass in einem ersten Betriebsmodus die Druckluft nach der Kühlung in dem Systemwärmetauscher OHX dem System oder Gerät zugeführt wird, mit dem der Systemwärmetauscher OHX in Verbindung steht und das mit gekühlter Druckluft zu versorgen ist, und dass in einem zweiten Betriebsmodus die Druckluft nach der Kühlung in dem Systemwärmetauscher OHX dem druckluftseitigen, mit dem wenigstens einen Klimaanlagenwärmetauscher in Verbindung stehenden Leitungssystem der Klimaanlage oder dem wenigstens einen Klimaanlagenwärmetauscher selbst zugeführt wird.

In dem zweiten Betriebsmodus kann die Kühlleistung des Systemwärmetauschers OHX zur Unterstützung der Kühlleistung der Klimaanlagenwärmetauscher genutzt werden.

Vorteilhafte Ausgestaltungen des Verfahrens sind Gegenstand der Unteransprüche.

Besonders vorteilhaft ist es, wenn die Druckluft in dem zweiten Betriebsmodus nach der Kühlung in dem Systemwärmetauscher OHX dem druckluftseitigen Ein- oder Auslass des wenigstens einen Klimaanlagenwärmetauschers, vorzugsweise dem Auslass des druckluftseitig ersten Klimaanlagenwärmetauschers zugeführt wird.

Weiterhin kann vorgesehen sein, dass der Systemwärmetauscher OHX sowie der wenigstens eine Klimaanlagenwärmetauscher über eine gemeinsame Druckluftleitung aus dem Druckluftzapfsystem versorgt werden.

In bestimmten Flugphasen mit relativ geringem Druckniveau der Versorgungsluft und hohem Frischluftbedarf kann ein teilweiser oder vollständiger Bypass der Turbine der Flugzeugklimaanlage erforderlich sein. Dem Bypass kann gegenüber dem herkömmlichen Betrieb deutlich kühlere Luft zugemischt werden, wenn der zweite Betriebsmodus eingestellt wird, wenn die Druckluft teilweise oder vollständig im Bypass um die Turbine zu führen ist.

In der druckluftseitigen Einlassleitung des Systemwärmetauschers OHX kann ein Ventil vorgesehen sein. Für den Fall, dass dieses Ventil fehlerhaft in der Schließstellung verbleibt, ist vorgesehen, dass der Systemwärmetauscher OHX mit Druckluft beaufschlagt wird, die stromaufwärts oder stromabwärts des wenigstens einen Klimaanlagenwärmetauschers oder aus dem Klimaanlagenwärmetauscher selbst entnommen wird. Somit führt der Ausfall des genannten Ventils nicht zu einem Totalausfall der durch den Systemwärmetauscher OHX zu versorgenden Systeme.

Weiterhin kann vorgesehen sein, dass der Systemwärmetauscher OHX und der wenigstens eine Klimaanlagenwärmetauscher durch einen gemeinsamen Einlass, jedoch mittels einer getrennten Zuführung mit Stau- oder Umgebungsluft beaufschlagt werden, und dass eine Staulufteinlassklappe vorgesehen ist, die in der ihrer Schließstellung ausschließlich die stauluftseitige Zuleitung der Klimaanlagenwärmetauscher verschließt, wobei die Staulufteinlassklappe im Heizbetrieb geschlossen wird, so dass die Stau- oder Umgebungsluft im Heizbetrieb nur durch den Systemwärmetauscher strömt. Somit kann sichergestellt werden, dass auch bei vollständig geschlossener Stauluftkanalklappe Stau- bzw. Umgebungsluft durch den Stauluftkanal strömt.

Weitere Einzelheiten und Vorteile der Erfindung werden anhand eines in der Zeichnung dargestellten Ausführungsbeispiels näher erläutert. Es zeigen:
- Fig. 1:: OBOGS/OBIGGS-Wärmetauscher OHX zur Kühlung von Druckluft;
- Fig. 2:: Architektur einer Flugzeugklimaanlage;
- Fig. 3:: Stauluftkanal der Flugzeugklimaanlage mit integriertem Systemwärmetauscher OHX;
- Fig. 4:: Anordnung des Systemwärmetauschers OHX im Stauluftkanal;
- Fig. 5:: Anordnung des Systemwärmetauschers OHX im Stauluftkanal;
- Fig. 6:: Systemwärmetauscher OHX mit in der Verbindungsleitung zu der Flugzeugklimaanlage befindlichen Ventil OHXOV;
- Fig. 7:: Klimaanlage mit Stauluftkanaleinlassklappe;
- Fig. 8:: Getrennter Stauluftkanal mit Stauluftkanaleinlassklappe zum Verschluss der Zuführung der Klimaanlagenwärmetauscher;
- Fig. 9.:: Architektur gemäß Fig. 6 mit über das FCV mit Druckluft versorgtem Systemwärmetauscher OHX;
- Fig. 10:: System zur Druckluftaufbereitung mit einem Verdichter als Druckluftquelle.

In den Figuren sind gleiche oder sich in ihrer Funktion entsprechende Teile mit gleichen Bezugszeichen versehen.

Fig. 2 zeigt den typischen Aufbau einer Flugzeugklimaanlage.

Dem Durchsatzregelventil FCV der Klimaanlage wird heiße Druckluft von den Triebwerken oder einem Hilfsaggregat zugeführt (ca. 200°C und 3 bar). Diese Luft wird im Vorwärmetauscher PHX auf etwa 100°C vorgekühlt und anschließend in einem Kompressor C weiter verdichtet. Danach erfolgt eine zweite Abkühlung der Druckluft im Hauptwärmetauscher SHX auf ca. 40°C mit nachfolgender Entfeuchtung in einem Wasserabscheidesystem. Danach wird die entfeuchtete Luft in der Turbine T entspannt und dabei bis auf ca. -30°C abgekühlt. Die an der Turbine anfallende Wellenleistung wird zum Antrieb des Kompressors und eines Gebläses zur Förderung von PHX/SHX Stauluft bzw. Umgebungsluft verwendet. Vom Turbinenauslass strömt die Luft durch das Wasserabscheidesystem und anschließend in eine Mischkammer bzw. in die Kabine.

Fig. 2 zeigt die Architektur einer Flugzeugklimaanlage nur beispielhaft. Unabhängig von der konkreten Architektur ist bei einer Flugzeugklimaanlage immer ein Stauluftkanal mit mindestens einem dort installierten Stauluftwärmetauscher vorhanden. Von der Erfindung sind Ausführungsformen umfasst, die einen (HX), zwei (PHX und SHX) oder auch mehr als zwei Klimaanlagenwärmetauscher aufweisen.

Die Fig. 3 bis 5 zeigen Ausführungsformen der Erfindung, die sich in der Anordnung des Systemwärmetauschers OHX unterscheiden. Die erfindungsgemäße verschließbare Leitung zwischen der druckluftseitigen Auslassseite des Systemwärmetauschers OHX und dem Druckluftleitungssystem der Flugzeugklimaanlage ist in diesem Zeichnungen nicht dargestellt. Die nicht dargestellte Leitung erstreckt sich bei den Ausführungsformen der Fig. 3 bis 5 zwischen dem druckluftseitigen Auslass des Systemwärmetauschers OHX und dem des druckluftseitig ersten Wärmetauschers PHX der Klimaanlage.

Fig. 3 zeigt die Integration des Systemwärmetauschers OHX in den gemeinsamen Stauluftkanal, in dem sich auch die Klimaanlagenwärmetauscher PHX und SHX befinden. Der OHX wird somit in den ohnehin vorhandenen Stauluftkanal der Klimaanlage integriert. Die Architektur der Druckluftkühlung für die OBOGS/OBIGGS Versorgung ist dabei unverändert gleich wie bereits in Fig. 1 gezeigt. Druckluft von ca. 200°C wird über das geöffnete Ventil OSOV dem Systemwärmetauscher OHX zugeführt. Zur Kühlung der Druckluft wird Stauluft aus dem gemeinsamen Staulufteinlasskanal von Klimaanlage und Systemwärmetauscher OHX genutzt. Mittels des Ventils OBPV in der Bypassleitung 50 wird der druckluftseitige Einlass des Systemwärmetauschers OHX mit dem druckluftseitigen Auslass verbunden. Durch entsprechendes Öffnen des OBPV kann die Temperatur der OBOGS/OBIGGS Versorgungsluft geregelt werden.

Wie oben erwähnt, sind die wesentlicheri Vorteile der in Fig. 3 gezeigten Integration des Systemwärmetauschers die Gewichts- und Platzeinsparung aufgrund des Wegfalls eines OBOGS/OBIGGS - Stauluftkanals. Ein weiterer Vorteil besteht darin, dass das Gebläse der Air-Cycle-Machine derart angeordnet ist, dass ein Stau- bzw. Umgebungsluftdurchsatz nicht nur für die Klimaanlagenwärmetauscher PHX, SHX, sondern auch für den Systemwärmetauscher OHX erzeugt wird. Bei der aus den Fig. 4 und 5 dargestellten Anordnung des Systemwärmetauschers OHX mit den Klimaanlagenwärmetauschern in Reihe ergibt sich weiter der Vorteil, dass die dem Systemwärmetauscher OHX zugeführte Stauluft nicht nutzlos durch den Systemwärmetauscher OHX geführt wird, sondern stets wenigstens einen der Klimaanlagenwärmetauscher durchströmt.

Wie aus Fig. 3 weiter hervorgeht, führt zu dem druckluftseitigen Einlass des Systemwärmetauschers OHX die Druckluftzuführung 60 und zu dem druckluftseitigen Einlass des Primärwärmetauschers PHX die Druckluftzuführung 70, die von einer gemeinsamen Druckluftleitung 80 des Druckluftzapfsystems abzweigen.

Die Anordnung des Systemwärmetauschers OHX bezüglich der oder dem Stauluftwärmetauscher PHX, SHX der Klimaanlage kann je nach Randbedingungen und Anforderungen unterschiedlich sein.

Folgende Fälle sind zu unterscheiden:
a) Falls eine relativ geringe Temperatur für die OBOGS/OBIGGS Luftversorgung gefordert ist, dann ist eine Anordnung des Systemwärmetauschers OHX vorteilhaft wie sie in Fig. 3 und Fig. 5 gezeigt ist. Gemäß Fig. 3 ist der Systemwärmetauscher OHX stauluftseitig parallel zu SHX und PHX angeordnet. Aus Fig. 5 ergibt sich eine Anordnung, bei der Systemwärmetauscher OHX stauluftseitig vor dem stauluftseitig ersten Wärmetauscher der Klimaanlage (SHX) angeordnet ist. Hierbei hat die Stauluft am Einlass des Systemwärmetauschers OHX die tiefstmögliche Temperatur und erzeugt somit die maximal mögliche Kühlung.
   Bei dem Ausführungsbeispiel gemäß Fig. 3 ist der Systemwärmetauscher OHX derart zu den Klimaanlagenwärmetauschern PHX und SHX angeordnet, dass die in den Systemwärmetauscher OHX eintretende Luft nicht durch SHX oder PHX vorgewärmt ist. Die Stauluft tiefstmöglicher Temperatur strömt sowohl in den Sekundärwärmetauscher SHX als auch in den Systemwärmetauscher OHX.
   Bei dem Ausführungsbeispiel gemäß Fig. 5 sind der Systemwärmetauscher OHX und der Sekundärwärmetauscher zumindest partiell in Reihe angeordnet. Der Systemwärmetauscher OHX überdeckt stauluftseitig eine Teilfläche des Sekundärwärmetauschers SHX, so dass dieser Teil des Sekundärwärmetauschers SHX mit dem Systemwärmetauscher OHX in Reihe geschaltet ist. Der Primärwärmetauscher PHX ist stauluftseitig dem Sekundärwärmetauscher SHX nachgeschaltet.
b) Je nach Filtermaterial und OBOGS/OBIGGS Anforderungen können auch höhere Temperaturen der Versorgungsluft zugelassen werden. Insbesondere OBIGGS Geräte erlauben tendenziell eine etwas höhere Temperatur der Versorgungsluft. In diesem Fall kann es vorteilhaft sein den Systemwärmetauscher OHX stauluftseitig nach dem SHX anzuordnen. Hierbei ergeben sich stauluftseitig höhere Einlasstemperaturen am OHX, welche druckluftseitig zu einer etwas höheren Auslasstemperatur führen.
   Der Vorteil hierbei ist, dass die Einheit aus SHX, PHX und OHX kompakter gebaut werden kann (siehe Fig. 4) und bei abgeschaltetem OBOGS/OBIGGS keine Stauluft nutzlos durch den OHX strömt. In dem Ausführungsbeispiel gemäß Fig. 4 strömt die Stau- bzw., Umgebungsluft zunächst durch den Sekundärwärmetauscher und sodann durch die nachgeschalteten und zueinander parallel angeordneten Systemwärmetauscher OHX und Primärwärmetauscher PHX.
c) Der OBOGS/OBIGGS Betrieb kann auch nur zeitweise notwendig sein (insbesondere OBOGS wird nur in sehr seltenen Fehlerfällen benötigt). Falls bei diesen Sonderbedingungen die Klimaanlage noch Leistungsreserven hat oder eine gewisse Leistungsreduzierung der Klimaanlage akzeptabel ist, dann kann der Systemwärmetauscher OHX auch in einem Teilbereich stauluftseitig vor dem ersten Wärmetauscher (SHX) der Klimaanlage angeordnet sein (Fig. 5). Hierbei können relativ geringe OBOGS/OBIGGS Versorgungslufttemperaturen erreicht werden. Bezüglich den dargestellten Einbauoptionen wird mit dieser Variante der kleinste mögliche Stauluftkanal sowie eine kompakte Wärmetauscher Anordnung erreicht.

Fig. 6 zeigt die verschließbare Verbindungsleitung 20 zwischen der druckluftseitigen Auslassseite des Systemwärmetauschers OHX und dem druckluftseitigen Auslass des druckluftseitigen ersten Stauluftwärmetauschers der Klimaanlage (hier PHX). In der Leitung ist das Auf-/Zu-Ventil 22 angeordnet, mittels die Leitung geöffnet oder verschlossen werden kann. Wenn OBOGS/OBIGGS abgeschaltet ist (Einlassventil am OBIGGS/OBOGS geschlossen, hier nicht dargestellt) dann wird das OHXSOV und OSOV geöffnet, wodurch ein zusätzlicher Wärmeübertrager für die Klimaanlage genutzt werden kann.

Falls der Systemwärmetauscher OHX auch im maximalen Kühlfall der Klimaanlage für die Klimaanlage zur Verfügung steht, dann können aufgrund der zusätzlichen Wärmeübertragungskapazität die Stauluftwärmetauscher PHX, SHX der Klimaanlage verkleinert werden mit den entsprechenden Vorteilen bezüglich Gewicht und Bauraum.

Bei abgeschlossenem OHXOV entsprecht der Betriebszustand dem in Fig. 3 dargestellten.

Wie aus Fig. 6 ersichtlich, zweigt von der Verbindungsleitung 20 zwischen dem druckluftseitigen Auslass des Systemwärmetauschers OHX und dem Absperrventil 22 eine Leitung 30 ab, die zu den Systemen OBOGS/OBIGGS führt.

Durch das OHXOV wird auch die Redundanz bezüglich der OBOGS/OBIGGS Versorgung erhöht. Sollte das OSOV in geschlossener Position ausfallen, so kann der Systemwärmetauscher OHX mit Druckluft von dem druckluftseitigen Auslass des PHX versorgt werden indem das OHXOV geöffnet wird. Bei einer Architektur ohne diese Verbindung (siehe Fig. 3) führt ein geschlossenes OSOV zum Ausfall der OBOGS/OBIGGS Versorgung.

Aufgrund der Tatsache, dass die Druckluftversorgung der Klimaanlage nun über zwei parallel angeordnete Ventile erfolgen kann (FCV und OSOV) sollte parallel zu dem FCV auch in dem OSOV-Zweig eine Durchsatzmessung erfolgen. Dies kann durch entsprechende Ausgestaltung des OSOVs erfolgen.

Die Verbindung über das OHXOV führt zu einem weiteren Vorteil.

In bestimmten Flugphasen mit relativ geringen Druckniveau der Versorgungsluft und hohem Frischluftbedarf kann es erforderlich sein, das TCV der Klimaanlage zumindest teilweise zu öffnen. Dadurch wird die Turbine, welche als Drossel wirkt, umgangen und somit die notwendige Durchlässigkeit der Klimaanlage gewährleistet. Durch das Öffnen des TCV wird jedoch ca. 100°C warme Luft mit der kalten Turbinenauslassluft von ca. -30°C vermischt, wodurch sich die Kühlleistung deutlich reduziert. Bei einer Anordnung wie in Fig. 6 dargestellt und ausgeschaltetem OBOGS/OBIGGS kann über ein offenes OHXOV dem TCV Einlass (= PHX druckluftseitiger Auslass) deutlich kühlere Luft zugemischt werden. Dieser positive Effekt ist insbesondere bei einem offenem TCV von Vorteil, er ist aber auch bei geschlossenem TCV vorhanden (geringe Kompressor Einlasstemperatur) jedoch in geringerem Maße.

Die erfindungsgemäße Lösung weist ferner die folgenden Vorteile im Heizbetrieb auf:

Die Funktion der Klimaanlage umfasst Kühlen und Heizen. Das Heizen wird ermöglicht, indem durch Öffnen des TCV die ACM (Air-Cycle-Machine) (einschließlich Kühlturbine) und der Stauluftwärmetauscher SHX zumindest teilweise umgangen wird (Fig. 7). Falls die dabei erreichte Heizleistung nicht ausreichend ist, kann auch eine zusätzliche und steuerbare Klappe am Einlass des Stauluftkanals vorhanden sein. Durch teilweises Schließen dieser Klappe wird der Stauluftdurchsatz und damit die Wärmeübertragung der Stauluftwärmetauscher (hier SHX und PHX) reduziert (siehe Fig. 7).

Auch in diesem Heizmodus läuft die ACM und damit das im Stauluftkanal angeordnete Gebläse immer mit einer bestimmten Mindestdrehzahl. Hierbei ist es notwendig, dass das Gebläse einen Mindestdurchsatz an Stauluft fördern kann. Ein zu geringer Stauluftdurchsatz führt zum Surge Betrieb (Pumpen, Vibrieren) der zum Ausfall des Gebläses und damit der ACM führen kann. Aus diesem Grund kann bei bekannten Systemen auch im Heizmodus die Staulufteinlassklappe nicht vollständig geschlossen werden, wodurch sich Einschränkungen gegenüber der maximal erzielbaren Heizleistung ergeben.

Diese Nachteile können durch eine entsprechende Gestaltung des Stauluftkanals in Verbindung mit der parallelen Anordnung des Systemwärmetauschers OHX vermieden werden (Fig. 8):
1) Nach der gemeinsamen Staulufteinlassöffnung 10 wird die Stauluft über getrennte Zuführungen 41, 42 getrennt zu dem Systemwärmetauscher OHX und dem oder den Stauluftwärmetauschern PHX, SHX der Klimaanlage geleitet. Dies wird mittels der Trennwand 40 erreicht, die sich in dem Stauluftkanal in dessen Längsrichtung erstreckt und diesen in die zwei sich bis zu den jeweiligen Wärmetauschern OHX, SHX erstreckenden Zuführungen 41, 42 trennt. Gemäß Fig. 8 ist stauluftseitig stromabwärts der Wärmetauscher OHX, PHX keine Trennwand vorhanden, so dass in diesem Bereich eine gemeinsame Durchströmung des Stauluftkanals erfolgt.
2) Die Staulufteinlassklappe ist so ausgeführt, dass in ganz geschlossenem Zustand nur der Staulufteinlass der Wärmetauscher PHX, SHX der Klimaanlage geschlossen ist, d.h. in der Zuführung 42 keine Stauluft strömt. Der Staulufteinlass des Systemwärmetauschers OHX bleibt offen, so dass Stauluft durch die Zuführung 41 in diesen einströmt.

Der notwendige Mindestdurchsatz für das Gebläse wird damit durch die Stauluft des Systemwärmetauschers OHX sichergestellt. Somit kann die Stauluftklappe im Heizmodus vollständig geschlossen werden, wodurch sich eine deutlich höhere Heizleistung der Klimaanlage ergibt. Die im Stauluftwärmetauscher OHX abgegebene Wärme hat keinen Einfluss auf die Klimaanlage, wenn der druckluftseitige Auslass des Systemwärmetauschers OHX von der Klimaanlage getrennt ist. Falls eine Konfiguration wie in Fig. 6 dargestellt verwendet wird, dann wird das OHXOV im Heizmodus geschlossen.

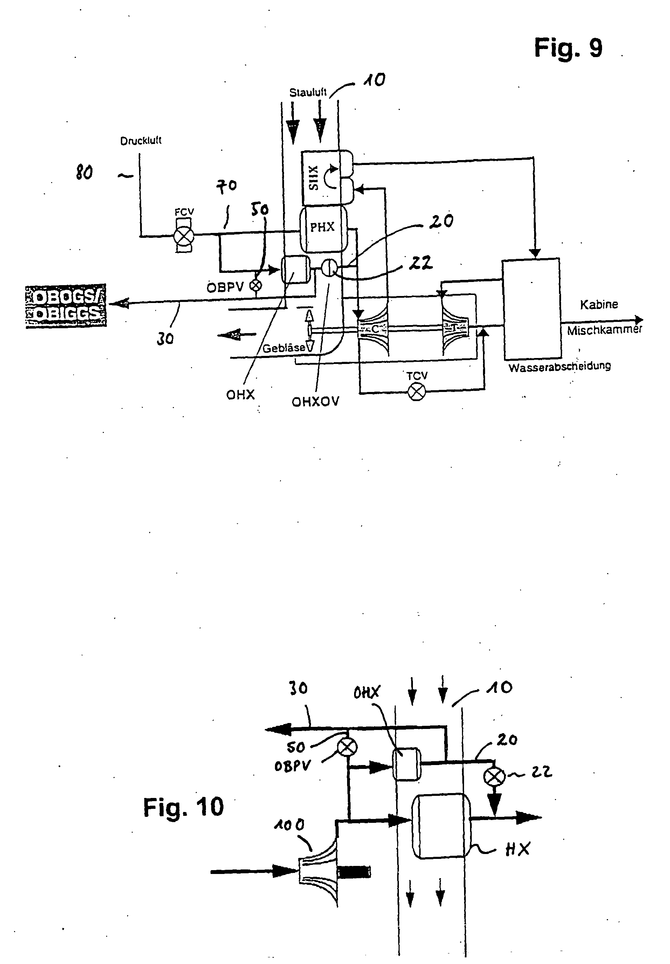

Fig. 9 zeigt ein erfindungsgemäßes System zur Druckluftaufbereitung, das weitgehend dem zu Fig. 6 erläuterten System entspricht, so dass entsprechend Bezug genommen wird. Ein Unterschied ergibt sich daraus, dass der druckluftseitige Einlass des Systemwärmetauschers OHX mit dem Auslass des Einlassventils FCV der Flugzeugklimaanlage über eine Leitung verbunden ist. Wie aus Fig. 9 ersichtlich, zweigt diese Leitung von der Leitung 70 ab, die sich zwischen dem Auslass des Einlassventils FCV und dem druckluftseitigen Einlass des druckluftseitig ersten Klimaanlagenwärmetauschers PHX erstreckt.

In der Ausführungsform gemäß Fig. 9 ist abweichend von der Ausführungsform gemäß Fig. 6 somit kein eigenes Einlassventil OSOV für den Systemwärmetauscher OHX vorgesehen.

Fig. 10 zeigt eine Ausführungsform der Erfindung, bei der der Verdichter 100 als Druckluftquelle dient.

Grundsätzlich ist darauf hinzuweisen, dass gemäß der vorliegenden Erfindung die Druckluftquelle nicht auf die Triebwerke oder ein Hilfsaggregat beschränkt ist, sondern beliebige Mittel zur Drucklufterzeugung umfasst.

Kommt ein Verdichter zum Einsatz, kann dieser einer Flugzeugklimaanlage vorgeschaltet oder auch Bestandteil der Klimaanlage selbst, beispielsweise Bestandteil einer ACM der Klimaanlage sein.

Der Verdichter kann beliebig angetrieben sein. In Betracht kommt beispielsweise ein motorisch angetriebener Verdichter und/oder ein Verdichter, der mit einer Turbine auf einer gemeinsamen Welle sitzt.

Der Verdichter kann ein- oder mehrstufig ausgeführt sein.

Die vorgenannten Ausführungsmöglichkeiten der Druckluftquelle gelten für die Druckluftversorgung des wenigstens einen Klimaanlagenwärmetauschers und/oder für die des Systemwärmetauschers.

Wie aus Fig. 10 weiter hervorgeht und wie oben ausgeführt, sind von der Erfindung Ausführungsformen erfasst, bei denen die Klimaanlage nur über einen Klimaanlagenwärmetauscher (HX) verfügt.

Wie aus Fig. 10 ersichtlich, steht der Verdichter 100 auf seiner Druckseite mit dem druckluftseitigen Einlass des Wärmetauschers HX in Verbindung, der in dem Stauluftkanal angeordnet ist. In dem Stauluftkanal befindet sich ferner der Systemwärmetauscher OHX, der mit der Druckseite des Verdichters auf seiner druckluftseitigen Einlassseite in Verbindung steht. Der druckluftseitige Auslass des Systemwärmetauschers OHX steht über die Verbindungsleitung 20 mit dem druckluftseitigen Auslass des Klimaanlagenwärmetauschers HX in Verbindung. In der Leitung 20 befindet sich das Absperrventil 22. Zwischen dem druckluftseitigen Auslass des Systemwärmetauschers OHX und dem Absperrventil 22 zweigt die Leitung 30 ab, die zu dem mit gekühlter Druckluft zu versorgenden Gerät, beispielsweise zu dem System OBOGS/OBIGGS führt. Die Leitung 30 steht über die Bypassleitung 50, die mittels des Ventils OBPV verschließbar ist, mit der Druckluftzuführung des OHX in Verbindung.

Nach der Kühlung der Druckluft in dem Wärmetauscher HX und gegebenenfalls nach der Zumischung von in dem Systemwärmetauscher OHX gekühlter Luft mittels der Leitung 20 wird die gekühlte Druckluft den weiterführenden Komponenten der Klimaanlage bzw. der Flugzeugkabine oder einer dieser vorgeschalteten Mischkammer zugeführt.

## Patentansprüche

1. System zur Druckluftaufbereitung mit einem Wärmetauscher (OHX) (Systemwärmetauscher), der druckluftseitig einlassseitig mit einer Druckluftquelle in Verbindung steht und druckluftseitig auslassseitig mit einem System (OBOGS; OBIGGS) oder Gerät in Verbindung steht, das mit gekühlter Druckluft zu versorgen ist, und mit wenigstens einem Wärmetauscher (PHX, SHX) (Klimaanlagenwärmetauscher), der druckluftseitig einlassseitig mit einer Druckluftquelle in Verbindung steht und druckluftseitig auslassseitig mit weiteren Komponenten einer Flugzeugklimaanlage in Verbindung steht,
**dadurch gekennzeichnet,**
**dass** der Systemwärmetauscher (OHX) und der wenigstens eine Klimaanlagenwärmetauscher (HX, PHX, SHX) über einen gemeinsamen Einlass (10) zur Zufuhr mit Stau- oder Umgebungsluft verfügen, und dass der Systemwärmetauscher (OHX) auf seiner druckiunseitigen Auslassseite mit dem druckluftseitigen, mit dem wenigstens einen Klimaanlagenwärmetauscher (HX, PHX, SHX) in Verbindung stehenden Leitungssystem oder mit dem wenigstens einen Klimaanlagenwärmetauscher selbst über eine verschließbare Leitung (20) verbunden ist.

2. System nach Anspruch 1, **dadurch gekennzeichnet, dass** der Systemwärmetauscher (OHX) auf seiner druckluftseitigen Auslassseite mit dem druckluftseitigen Ein- oder Auslass des wenigstens einen Klimaanlagenwärmetauschers (HX, PHX) über die verschließbare Leitung (20) verbunden ist.

3. System nach Anspruch 1 oder 2, **dadurch gekennzeichnet, dass** die verschließbare Leitung (20) ein Auf-/Zu-Ventil (22) oder ein Ventil aufweist, mittels dessen sich unterschiedliche Durchsätze durch die Leitung einstellen lassen.

4. System nach einem der vorhergehenden Ansprüche, **dadurch gekennzeichnet, dass** sich die verschließbare Leitung (20) zwischen dem druckluftseitigen Auslass des Systemwärmetauschers (OHX) und dem druckluftseitigen Auslass des wenigstens einen Klimaanlagenwärmetauschers (HX, PHX) erstreckt und von dieser Leitung (20) stromaufwärts eines Ventils (22), mittels dessen die Leitung (20) verschließbar ist, eine Leitung (30) abzweigt, die zu dem System (OBOGS; OBIGGS) oder Gerät führt, das mit gekühlter Druckluft zu versorgen ist.

5. System nach einem der vorhergehenden Ansprüche, **dadurch gekennzeichnet, dass** ein druckluftseitig erster (PHX) und ein diesem druckluftseitig nachgeschalteter zweiter Klimaanlagenwärmetauscher (SHX) vorgesehen ist und dass der Systemwärmetauscher (OHX) auf seiner druckluftseitigen Auslassseite über die verschließbare Leitung (20) mit dem druckluftseitigen Ein- oder Auslass des druckluftseitig ersten Klimaanlagenwärmetauschers (PHX) verbunden ist.

6. System nach Anspruch 5, **dadurch gekennzeichnet, dass** sich die verschließbare Leitung (20) zwischen dem druckluftseitigen Auslass des Systemwärmetauscher (OHX) und dem druckluftseitigen Auslass des ersten Klimaanlagenwärmetauschers (PHX) erstreckt und von dieser Leitung (20) stromaufwärts des Ventils (22), mittels dessen die Leitung verschließbar ist, eine Leitung (30) abzweigt, die zu dem System (OBOGS; OBIGGS) oder Gerät führt, das mit gekühlter Druckluft zu versorgen ist.

7. System nach einem der vorhergehenden Ansprüche, **dadurch gekennzeichnet, dass** der Systemwärmetauscher (OHX) zu dem oder den Klimaanlagenwärmetauschem (PHX, SHX) stauluftseitig parallel geschaltet ist.

8. System nach einem der vorhergehenden Ansprüche, **dadurch gekennzeichnet, dass** der Systemwärmetauscher (OHX) stauluftseitig vor dem stauluftseitig ersten Klimaanlagenwärmetauscher (SHX) angeordnet ist.

9. System nach einem der Ansprüche 1 bis 7, **dadurch gekennzeichnet, dass** der Systemwärmetauscher (OHX) stauluftseitig nach dem stauluftseitig ersten Klimaanlagenwärmetauscher (SHX) angeordnet ist.

10. System nach einem der vorhergehenden Ansprüche, **dadurch gekennzeichnet, dass** zwei oder mehr Klimaanlagenwärmetauscher (PHX, SHX) vorgesehen sind, die stauluftseitig hintereinander angeordnet sind und dass der Systemwärmetauscher (OHX) stauluftseitig nach dem stauluftseitig ersten Klimaanlagenwärmetauscher (SHX) und stauluftseitig parallel zu einem weiteren Klimaanlagenwärmetauscher (PHX) angeordnet ist.

11. System nach einem der vorhergehenden Ansprüche, **dadurch gekennzeichnet, dass** eine Trennwand (40) vorgesehen ist, die bewirkt, dass die Stauluftzuführung für den Systemwärmetauscher (OHX) sowie für den oder die Klimaanlagenwärmetauscher (PHX, SHX) getrennt (41, 42) erfolgt, und dass eine verstellbare Staulufteinlassklappe vorgesehen ist, die im geschlossenen Zustand ausschließlich die stauluftseitige Zuleitung (42) des oder der Klimaanlagenwärmetauscher (PHX, SHX) verschließt.

12. System nach einem der vorhergehenden Ansprüche, **dadurch gekennzeichnet, dass** die druckluftseitige Einlassleitung des Systemwärmetauschers (OHX) und dessen druckluftseitige Auslassleitung, die zu dem mit der gekühlten Druckluft zu versorgenden System (OBOGS, OBIGGS) oder Gerät führt, mittels einer verschließbaren Bypassleitung (50) miteinander in Verbindung stehen.

13. System nach einem der vorhergehenden Ansprüche, **dadurch gekennzeichnet, dass** die zu dem druckluftseitigen Einlass des Systemwärmetauschers (OHX) führende Druckluftzuführung und die zu dem druckluftseitigen Einlass des oder der Klimaanlagenwärmetauscher (HX, PHX, SHX) führende Druckluftzuführung (60, 70) von einer gemeinsamen Druckluftleitung (80) vom Druckluftzapfsystem abzweigen.

14. System nach einem der vorhergehenden Ansprüche, **dadurch gekennzeichnet, dass** der druckluftseitige Einlass des Systemwärmetauschers (OHX) über ein Ventil (OSOV) mit der Druckluftzuführung verbunden ist.

15. System nach Anspruch 14, **dadurch gekennzeichnet, dass** das Ventil (OSOV) parallel zu dem Einlassventil (FCV) der Flugzeugzeugklimaanlage geschaltet ist.

16. System nach einem der vorhergehenden Ansprüche, **dadurch gekennzeichnet, dass** der druckluftseitige Einlass des Systemwärmetauschers (OHX) mit dem Auslass des Einlassventils (FCV) der Flugzeugzeugklimaanlage über eine Leitung verbunden ist.

17. System nach einem der vorhergehenden Ansprüche, **dadurch gekennzeichnet, dass** es sich bei dem System (OBOGS; OBIGGS) oder Gerät, mit dem der Systemwärmetauscher (OHX) auf der Druckluftseite auslassseitig in Verbindung steht und das mit gekühlter Druckluft zu versorgen ist, um ein Notsauerstoffversorgungssystem (OBOGS) und/oder um ein Stickstofferzeugungssystem (OBIGGS) handelt.

18. System nach einem der vorhergehenden Ansprüche, **dadurch gekennzeichnet, dass** es sich bei der Druckluftquelle um einen ein- oder mehrstufigen Verdichter, vorzugsweise einen motorisch angetriebenen Verdichter handelt.

19. Verfahren zum Betrieb eines Systems zur Druckluftaufbereitung mit einem ersten Wärmetauscher (OHX) (Systemwärmetauscher), der druckluftseitig einlassseitig mit einer Druckluftquelle in Verbindung steht und druckluftseitig auslassseitig mit einem System (OBOGS, OBIGGS) oder Gerät in Verbindung steht, das mit gekühlter Druckluft zu versorgen ist, und mit wenigstens einem Wärmetauscher (HX, PHX, SHX) (Klimaanlagenwärmetauscher), der druckluftseitig einlassseitig mit einer Druckluftquelle in Verbindung steht und druckluftseitig auslassseitig mit weiteren Komponenten einer Flugzeugklimaanlage in Verbindung steht,
**dadurch gekennzeichnet,**
**dass** in einem ersten Betriebsmodus die Druckluft nach der Kühlung in dem Systemwärmetauscher (OHX) dem System (OBOGS; OBIGGS) oder Gerät zugeführt wird, mit dem der Systemwärmetauscher (OHX) in Verbindung steht und das mit gekühlter Druckluft zu versorgen ist, und dass in einem zweiten Betriebsmodus die Druckluft nach der Kühlung in dem Systemwärmetauscher (OHX) dem druckluftseitigen, mit dem wenigstens einen Klimaanlagenwärmetauscher (HX, PHX, SHX) in Verbindung stehenden Leitungssystem oder dem wenigstens einen Klimaanlagenwärmetauscher selbst zugeführt wird.

20. Verfahren nach Anspruch 19, **dadurch gekennzeichnet, dass** die Druckluft in dem zweiten Betriebsmodus nach der Kühlung in dem Systemwärmetauscher (OHX) dem druckluftseitigen Ein- oder Auslass des wenigstens einen Klimaanlagenwärmetauschers (HX, PHX) zugeführt wird.

21. Verfahren nach Anspruch 19 oder 20, **dadurch gekennzeichnet, dass** der Systemwärmetauscher (OHX) sowie der wenigstens eine Klimaanlagenwärmetauscher (HX, PHX, SHX) über eine gemeinsame Druckluftleitung (80) aus dem Druckluftzapfsystem versorgt werden.

22. Verfahren nach einem der vorhergehenden Ansprüche, **dadurch gekennzeichnet, dass** das System zur Druckluftaufbereitung eine Flugzeugklimaanlage umfasst, die eine Turbine (T) aufweist, die druckluftseitig mit dem wenigstens einen Klimaanlagenwärmetauscher (PHX, SHX) in Verbindung steht, und dass, wenn die Druckluft teilweise oder vollständig im Bypass um die Turbine (T) geführt wird, der zweite Betriebsmodus eingestellt wird.

23. Verfahren nach einem der vorhergehenden Ansprüche, **dadurch gekennzeichnet, dass** in der druckluftseitigen Einlassleitung (70) des Systemwärmetauschers (OHX) ein Ventil (OSOV) vorgesehen ist, und dass in dem Fall, dass dieses Ventil (OSOV) fehlerhaft in der Schließstellung verbleibt, der Systemwärmetauscher (OHX) mit Druckluft beaufschlagt wird, die stromaufwärts oder stromabwärts des wenigstens einen Klimaanlagenwärmetauschers (PHX) oder aus dem Klimaanlagenwärmetauscher selbst entnommen wird.

24. Verfahren nach einem der vorhergehenden Ansprüche, **dadurch gekennzeichnet, dass** der Systemwärmetauscher (OHX) und der wenigstens eine Klimaanlagenwärmetauscher (PHX, SHX) durch einen gemeinsamen Einlass (10), jedoch mittels einer getrennten Zuführung (41, 42) mit Stau- oder Umgebungsluft beaufschlagt werden, und dass eine Staulufteinlassklappe vorgesehen ist, die in der ihrer Schließstellung ausschließlich die stauluftseitige Zuleitung (42) der Klimaanlagenwärmetauscher (PHX, SHX) verschließt, wobei die Staulufteinlassklappe im Heizbetrieb geschlossen wird, so dass die Stau- oder Umgebungsluft im Heizbetrieb nur durch den Systemwärmetauscher (OHX) strömt.

## Claims

1. Compressed air treatment system having a heat exchanger (OHX) (system heat exchanger) which is connected at the compressed air side inlet side to a compressed air source, and is connected at the compressed air side outlet side to a system (OBOGS; OBIGGS) or unit which is to be supplied with cooled compressed air, and having at least one heat exchanger (PHX, SHX) (air-conditioning system heat exchanger) which is connected at the compressed air side inlet side to a compressed air source, and is connected at the compressed air side outlet side to further components of an aircraft air-conditioning system,
**characterized**
**in that** the system heat exchanger (OHX) and the at least one air-conditioning system heat exchanger (HX, PHX, SHX) have a common inlet (10) to be supplied with ram air or ambient air, and in that the system heat exchanger (OHX) is connected, at its compressed air side outlet side, to the compressed air side line system connected to the at least one air-conditioning system heat exchanger (HX, PHX, SHX), or to the at least one air-conditioning system heat exchanger itself, by means of a closable line (20).

2. System according to Claim 1, **characterized in that** the system heat exchanger (OHX) is connected at its compressed air side outlet side to the compressed air side inlet or outlet of the at least one air-conditioning system heat exchanger (HX, PHX) by means of the closable line (20).

3. System according to Claim 1 or 2, **characterized in that** the closable line (20) has an open/closed valve (22) or a valve with which it is possible to set different throughputs through the line.

4. System according to one of the preceding claims, **characterized in that** the closable line (20) extends between the compressed air side outlet of the system heat exchanger (OHX) and the compressed air side outlet of the at least one air-conditioning system heat exchanger (HX, PHX), and **in that** a line (30), which leads to the system (OBOGS; OBIGGS) or unit which is to be supplied with cooled compressed air, branches off from said line (20) upstream of a valve (22) which can close off the line (20).

5. System according to one of the preceding claims, **characterized in that** a first compressed air side air-conditioning system heat exchanger (PHX) and a second compressed air side air-conditioning system heat exchanger (SHX), which is connected downstream of said first air-conditioning system heat exchanger (PHX), are provided, and **in that** the system heat exchanger (OHX) is connected, at its compressed air side outlet side, to the compressed air side inlet or outlet of the first compressed air side air-conditioning system heat exchanger (PHX) by means of the closable line (20).

6. System according to Claim 5, **characterized in that** the closable line (20) extends between the compressed air side outlet of the system heat exchanger (OHX) and the compressed air side outlet of the first air-conditioning system heat exchanger (PHX), and **in that** a line (30), which leads to the system (OBOGS; OBIGGS) or unit which is to be supplied with cooled compressed air, branches off from said line (20) upstream of the valve (22) which can close off the line.

7. System according to one of the preceding claims, **characterized in that**, at the ram air side, the system heat exchanger (OHX) is connected in parallel with the air-conditioning system heat exchanger(s) (PHX, SHX).

8. System according to one of the preceding claims, **characterized in that**, at the ram air side, the system heat exchanger (OHX) is arranged upstream of the first ram air side air-conditioning system heat exchanger (SHX).

9. System according to one of Claims 1 to 7, **characterized in that**, at the ram air side, the system heat exchanger (OHX) is arranged downstream of the first ram air side air-conditioning system heat exchanger (SHX).

10. System according to one of the preceding claims, **characterized in that** two or more air-conditioning system heat exchangers (PHX, SHX) are provided which are arranged in series at the ram air side, and **in that**, at the ram air side, the system heat exchanger (OHX) is arranged downstream of the ram air side first air-conditioning system heat exchanger (SHX) and, at the ram air side, is arranged in parallel with a further air-conditioning system heat exchanger (PHX).

11. System according to one of the preceding claims, **characterized in that** a separating wall (40) is provided which has the effect that the ram air supply to the system heat exchanger (OHX) and to the air-conditioning system heat exchanger(s) (PHX, SHX) is separate (41, 42), and **in that** an adjustable ram air inlet flap is provided which, in the closed state, closes off only the ram air side supply line (42) of the air-conditioning system heat exchanger(s) (PHX, SHX).

12. System according to one of the preceding claims, **characterized in that** the compressed air side inlet line of the system heat exchanger (OHX), and the compressed air side outlet line thereof which leads to the system (OBOGS, OBIGGS) or unit which is to be supplied with cooled compressed air, are connected to one another by means of a closable bypass line (50).

13. System according to one of the preceding claims, **characterized in that** the compressed air supply which leads to the compressed air side inlet of the system heat exchanger (OHX), and the compressed air line (60, 70) which leads to the compressed air side inlet of the air-conditioning system heat exchanger(s) (HX, PHX, SHX), branch off from a common compressed air line (80) from the compressed air bleed system.

14. System according to one of the preceding claims, **characterized in that** the compressed air side inlet of the system heat exchanger (OHX) is connected to the compressed air supply by means of a valve (OSOV).

15. System according to Claim 14, **characterized in that** the valve (OSOV) is connected in parallel with the inlet valve (FCV) of the aircraft air-conditioning system.

16. System according to one of the preceding claims, **characterized in that** the compressed air side inlet of the system heat exchanger (OHX) is connected to the outlet of the inlet valve (FCV) of the aircraft air-conditioning system by means of a line.

17. System according to one of the preceding claims, **characterized in that** the system (OBOGS; OBIGGS) or unit to which the system heat exchanger (OHX) is connected at the compressed air side outlet and which is to be supplied with cooled compressed air is an emergency oxygen supply system (OBOGS) and/or a nitrogen generating system (OBIGGS).

18. System according to one of the preceding claims, **characterized in that** the compressed air source is a single-stage or multi-stage compressor, preferably a motor-driven compressor.

19. Method for operating a compressed air treatment system having a first heat exchanger (OHX) (system heat exchanger) which is connected at the compressed air side inlet side to a compressed air source, and is connected at the compressed air side outlet side to a system (OBOGS, OBIGGS) or unit which is to be supplied with cooled compressed air, and having at least one heat exchanger (HX, PHX, SHX) (air-conditioning system heat exchanger) which is connected at the compressed air side inlet side to a compressed air source, and is connected at the compressed air side outlet side to further components of an aircraft air-conditioning system,
**characterized**
**in that**, in a first operating mode, the compressed air is supplied, after being cooled in the system heat exchanger (OHX), to the system (OBOGS; OBIGGS) or unit which is connected to the system heat exchanger (OHX) and is to be supplied with cooler compressed air, and in that, in a second operating mode, the compressed air is supplied, after being cooled in the system heat exchanger (OHX), to the compressed air side line system connected to the at least one air-conditioning system heat exchanger (HX, PHX, SHX), or to the at least one air-conditioning system heat exchanger itself.

20. Method according to Claim 19, **characterized in that**, in the second operating mode, the compressed air is supplied, after being cooled in the system heat exchanger (OHX), to the compressed air side inlet or outlet of the at least one air-conditioning system heat exchanger (HX, PHX).

21. Method according to Claim 19 or 20, **characterized in that** the system heat exchanger (OHX) and the at least one air-conditioning system heat exchanger (HX, PHX, SHX) are supplied from the compressed air bleed system by means of a common compressed air line (80).

22. Method according to one of the preceding claims, **characterized in that** the system for pressurizing air comprises an aircraft air-conditioning system which has a turbine (T) which is connected at the compressed air side to the at least one air-conditioning system heat exchanger (PHX, SHX), and **in that** the second operating mode is implemented when the compressed air is partially or entirely guided, in the bypass, around the turbine (T).

23. Method according to one of the preceding claims, **characterized in that** a valve (OSOV) is provided in the compressed air side inlet line (70) of the system heat exchanger (OHX), and **in that**, in the event of said valve (OSOV) remaining in the closed position as a result of a fault, the system heat exchanger (OHX) is acted on with compressed air which is extracted upstream or downstream of the at least one air-conditioning system heat exchanger (PHX) or from the air-conditioning system heat exchanger itself.

24. Method according to one of the preceding claims, **characterized in that** the system heat exchanger (OHX) and the at least one air-conditioning system heat exchanger (PHX, SHX) are supplied with ram air or ambient air through a common inlet (10) but by means of a separate supply line (41, 42), and **in that** a ram air inlet flap is provided which, in its closed position, closes off only the ram air side supply line (42) of the air-conditioning system heat exchanger (PHX, SHX), the ram air inlet flap being closed in heating operation, so that the ram air or ambient air flows only through the system heat exchanger (OHX) in heating operation.

## Revendications

1. Système pour le traitement d'air comprimé comprenant un échangeur de chaleur (OHX) (échangeur de chaleur à système), qui est en liaison côté air comprimé côté entrée avec une source d'air comprimé et côté air comprimé côté sortie avec un système (OBOGS; OBIGGS) ou un appareil, qui peut être alimenté avec de l'air comprimé refroidi, et au moins un échangeur de chaleur (PHX, SHX) (échangeur de chaleur d'installation de climatisation), qui est en liaison côté air comprimé côté entrée avec une source d'air comprimé et côté air comprimé côté sortie avec d'autres composants d'une installation de climatisation d'avion,
**caractérisé en ce que**
l'échangeur de chaleur à système (OHX) et le au moins un échangeur de chaleur d'installation de climatisation (HX, PX, SHX) disposent d'une entrée (10) commune pour l'alimentation avec de l'air de retenue ou de l'air ambiant, et **en ce que** l'échangeur de chaleur à système (OHX) est relié sur son côté sortie côté air comprimé avec le système de conduite côté air comprimé, en liaison avec le au moins un échangeur de chaleur d'installation de climatisation (HX, PHX, SHX) ou avec le au moins un échangeur de chaleur d'installation de climatisation même au moyen d'une conduite (20) pouvant être fermée.

2. Système selon la revendication 1, **caractérisé en ce que** l'échangeur de chaleur à système (OHX) est relié sur son côté sortie côté air comprimé à l'entrée ou à la sortie côté air comprimé du au moins un échangeur de chaleur d'installation de climatisation (HX, PHX) par la conduite (20) pouvant être fermée.

3. Système selon la revendication 1 ou 2, **caractérisé en ce que** la conduite (20) pouvant être fermée présente une vanne d'ouverture/fermeture (22) ou une vanne qui permet de régler différents débits par la conduite.

4. Système selon l'une quelconque des revendications précédentes, **caractérisé en ce que** la conduite (20) pouvant être fermée s'étend entre la sortie côté air comprimé de l'échangeur à système (OHX) et la sortie côté air comprimé du au moins un échangeur de chaleur d'installation de climatisation (HX, PHX) et de cette conduite (20) en amont d'une vanne (22), au moyen de laquelle la conduite (20) peut être fermée, part une conduite (30) qui aboutit au système (OBOGS; OBIGGS) ou à l'appareil qui peut être alimenté avec de l'air comprimé refroidi.

5. Système selon l'une quelconque des revendications précédentes, **caractérisé en ce qu'**il est prévu un premier côté air comprimé échangeur de chaleur d'installation de climatisation (PHX) et un second échangeur de chaleur d'installation de climatisation (SHX) branché en amont du premier côté air comprimé et **en ce que** l'échangeur de chaleur à système (OHX) est relié sur son côté sortie côté air comprimé par la conduite (20) pouvant être fermée à l'entrée ou la sortie côté air comprimé du premier côté air comprimé échangeur de chaleur d'installation de climatisation (PHX).

6. Système selon la revendication 5, **caractérisé en ce que** la conduite (20) pouvant être fermée s'étend entre la sortie côté air comprimé de l'échangeur de chaleur à système (OHX) et la sortie côté air comprimé du premier échangeur de chaleur d'installation de climatisation (PHX) et de cette conduite (20) en amont de la vanne (22), au moyen de laquelle la conduite peut être fermée, part une conduite (30) qui aboutit au système (OBOGS; OBIGGS) ou à l'appareil qui peut être alimenté avec de l'air comprimé refroidi.

7. Système selon l'une quelconque des revendications précédentes, **caractérisé en ce que** l'échangeur de chaleur à système (OHX) est branché parallèlement côté air de retenue à l'échangeur ou aux échangeurs de chaleur d'installation de climatisation (PHX, SHX).

8. Système selon l'une quelconque des revendications précédentes, **caractérisé en ce que** l'échangeur de chaleur à système (OHX) est disposé côté air de retenue en amont du premier côté air de retenue échangeur de chaleur d'installation de climatisation (SHX).

9. Système selon l'une quelconque des revendications 1 à 7, **caractérisé en ce que** l'échangeur de chaleur à système (OHX) est disposé côté air de retenue après le premier côté air de retenue échangeur de chaleur d'installation de climatisation (SHX).

10. Système selon l'une quelconque des revendications précédentes, **caractérisé en ce que** deux ou plus de deux échangeurs de chaleur d'installation de climatisation (PHX, SHX) sont prévus, lesquels sont disposés les uns derrière les autres côté air de retenue et **en ce que** l'échangeur de chaleur à système (OHX) est disposé côté air de retenue après le premier côté air de retenue échangeur de chaleur d'installation de climatisation (SHX) et côté air de retenue parallèlement à un autre échangeur de chaleur d'installation de climatisation (PHX).

11. Système selon l'une quelconque des revendications précédentes, **caractérisé en ce qu'**il est prévu une paroi de séparation (40) qui fait que l'arrivée d'air de retenue s'effectue séparément pour l'échangeur de chaleur à système (OHX) et pour le ou les échangeurs de chaleur d'installation de climatisation (PHX, SHX) (41, 42), et **en ce qu'**il est prévu un clapet réglable d'entrée d'air de retenue, qui ferme dans l'état fermé exclusivement l'arrivée (42) côté air de retenue du ou des échangeurs de chaleur d'installation de climatisation (PHX, SHX).

12. Système selon l'une quelconque des revendications précédentes, **caractérisé en ce que** la conduite d'entrée côté air comprimé de l'échangeur de chaleur à système (OHX) et sa conduite de sortie côté air comprimé, qui aboutit au système (OBOGS, OBIGGS) ou à l'appareil qui peut être alimenté avec de l'air comprimé refroidi, sont en liaison entre eux au moyen d'une conduite de dérivation (50) pouvant être fermée.

13. Système selon l'une quelconque des revendications précédentes, **caractérisé en ce que** l'arrivée d'air comprimé aboutissant à l'entrée côté air comprimé de l'échangeur de chaleur à système (OHX) et l'arrivée d'air comprimé (60, 70) aboutissant à l'entrée côté air comprimé du ou des échangeurs de chaleur d'installation de climatisation (HX, PX, SHX) partent d'une conduite d'air comprimé (80) commune du système de distribution d'air comprimé.

14. Système selon l'une quelconque des revendications précédentes, **caractérisé en ce que** l'entrée côté air comprimé de l'échangeur de chaleur à système (OHX) est reliée par une vanne (OSOV) à l'arrivée d'air comprimé.

15. Système selon la revendication 14, **caractérisé en ce que** la vanne (OSOV) est branchée parallèlement à la vanne d'entrée (FCV) de l'installation de climatisation d'avion.

16. Système selon l'une quelconque des revendications précédentes, **caractérisé en ce que** l'entrée côté air comprimé de l'échangeur de chaleur à système (OHX) est reliée par une conduite à la sortie de la vanne d'entrée (FCV) de l'installation de climatisation d'avion.

17. Système selon l'une quelconque des revendications précédentes, **caractérisé en ce que**, en ce qui concerne le système (OBOGS; OBIGGS) ou de l'appareil, avec lequel l'échangeur de chaleur à système (OHX) est en liaison sur le côté air comprimé côté sortie et qui doit être alimenté avec de l'air comprimé refroidi, il s'agit d'un système d'alimentation en oxygène de secours (OBOGS) et/ou d'un système de production d'azote (OBIGGS).

18. Système selon l'une quelconque des revendications précédentes, **caractérisé en ce que**, en ce qui concerne la source d'air comprimé, il s'agit d'un compresseur à un ou plusieurs niveaux, de préférence d'un compresseur entraîné par moteur.

19. Procédé pour l'exploitation d'un système pour un système de traitement d'air comprimé comprenant un premier échangeur de chaleur (OHX) (échangeur de chaleur à système), qui est en liaison côté air comprimé côté entrée avec une source d'air comprimé et côté air comprimé côté sortie avec un système (OBOGS, OBIGGS) ou un appareil qui peut être alimenté avec de l'air comprimé refroidi, et au moins un échangeur de chaleur (HX, PHX, SHX) (échangeur de chaleur d'installation de climatisation), qui est en liaison côté air comprimé côté entrée avec une source d'air comprimé et est en liaison côté air comprimé côté sortie avec d'autres composants d'une installation de climatisation d'avion,
**caractérisé**
dans un premier mode de service, l'air comprimé est amené après le refroidissement dans l'échangeur de chaleur à système (OHX) au système (OBOGS; OBIGGS) ou l'appareil, avec lequel l'échangeur de chaleur à système (OHX) est en liaison et qui doit être alimenté avec de l'air comprimé refroidi, et en ce que, dans un second mode de service, l'air comprimé est amené après le refroidissement dans l'échangeur de chaleur à système (OHX) au système de conduite côté air comprimé, en liaison avec le au moins un échangeur de chaleur d'installation de climatisation (HX, PHX, SHX) ou le au moins un échangeur de chaleur d'installation de climatisation même.

20. Procédé selon la revendication 19, **caractérisé en ce que** l'air comprimé est amené dans le second mode de service, après le refroidissement dans l'échangeur de chaleur à système (OHX), à l'entrée ou à la sortie côté air comprimé du au moins un échangeur de chaleur d'installation de climatisation (HX, PHX).

21. Procédé selon la revendication 19 ou 20, **caractérisé en ce que** l'échangeur de chaleur à système (OHX) et le au moins un échangeur de chaleur d'installation de climatisation (HX, PHX, SHX) sont alimentés à l'aide d'une conduite d'air comprimé (80) commune à partir du système de distribution d'air comprimé.

22. Procédé selon l'une quelconque des revendications précédentes, **caractérisé en ce que** le système pour le traitement d'air comprimé comprend une installation de climatisation d'avion qui présente une turbine (T) qui est en liaison côté air comprimé avec le au moins un échangeur de chaleur d'installation de climatisation (PHX, SHX) et **en ce que**, lorsque l'air comprimé est guidé partiellement ou complètement dans la dérivation autour de la turbine (T), le second mode de service est ajusté.

23. Procédé selon l'une quelconque des revendications précédentes, **caractérisé en ce qu'**une vanne (OSOV) est prévue dans la conduite d'entrée (70) côté air comprimé de l'échangeur de chaleur à système (OHX) et **en ce que**, dans le cas où cette vanne (OSOV) reste par erreur dans la position de fermeture, l'échangeur de chaleur à système (OHX) est alimenté en air comprimé, qui est prélevé en amont ou en aval du au moins un échangeur de chaleur d'installation de climatisation (PHX) ou sur l'échangeur de chaleur d'installation de climatisation même.

24. Procédé selon l'une quelconque des revendications précédentes, **caractérisé en ce que** l'échangeur de chaleur à système (OHX) et le au moins un échangeur de chaleur d'installation de climatisation (PHX, SHX) sont alimentés par une entrée (10) commune, mais au moyen d'une arrivée (41, 42) séparée en air de retenue ou en air d'alimentation, et **en ce qu'**il est prévu un clapet d'entrée d'air de retenue qui, dans sa position de fermeture, ferme uniquement l'arrivée (42) côté air de retenue des échangeur de chaleur d'installation de climatisation (PHX, SHX), le clapet d'entrée d'air de retenue étant fermé en mode chauffage, de sorte que l'air de retenue ou l'air ambiant ne circule en mode chauffage qu'à travers l'échangeur de chaleur à système (OHX).
